# FASCICULE DE BREVET EUROPEEN

(11) **EP 1 568 868 B1**
(45) Date de publication et mention de la délivrance du brevet: **27.04.2016**
(21) Numéro de dépôt: 05290121.2
(22) Date de dépôt: 20.01.2005
(51) Int. Cl.: F02K 1/68, F02C 7/20, F01D 5/22

(54) **Turboréacteur à fort taux de dilution**
Turboantriebwerk mit hohem Nebenstromverhältnis
High by-pass ratio turbofan

(30) Priorité: 05.02.2004 FR 0401083
(43) Date de publication de la demande: 31.08.2005
(73) Titulaire: SNECMA, 75015 Paris (FR)
(72) Inventeur: Beutin, Bruno, 91000 Evry (FR); Dos Santos, Nelson, 94000 Creteil (FR); Fert, Jeremy, 75012 Paris (FR); Lacorre, Fabienne, 77000 Vaux Le Penil (FR); Picard, Jean-Louis, 77000 Vaux Le Penil (FR)
(74) Mandataire: Ramey, Daniel

(56) Documents cités:
- FR-A- 2 625 261
- US-A- 4 471 609
- US-A- 4 683 717
- US-A- 4 785 625
- US-A- 5 275 357

## Description

L'invention concerne un turboréacteur, en particulier un turboréacteur à fort taux de dilution, comprenant au moins un compresseur, une chambre de combustion, une turbine, une soufflante montée en amont du compresseur et entraînée en rotation par la turbine, et des moyens définissant, en aval de la soufflante, un espace annulaire d'écoulement d'air pour créer un flux secondaire autour des carters du compresseur, de la chambre de combustion et de la turbine, qui s'ajoute aux gaz de combustion du flux primaire pour augmenter la poussée.

Le document US-A-4,785,625 décrit une turbomachine dont le carter externe comprend un partie axiale qui est reliée rigidement à une portion de nacelle portée par une aile d'avion, de façon à assurer la transmission d'efforts entre la turbomachine et cette aile.

Les turboréacteurs des avions civils modernes sont caractérisés par un grand taux de dilution, c'est à dire par un rapport débit secondaire / débit primaire qui est supérieur à 5 et qui peut atteindre 9 ou 10. Cela se traduit par une réduction des dimensions transversales du corps du turboréacteur entre la soufflante et la turbine (effet « taille de guêpe ») et la réduction de ces dimensions transversales provoque une diminution de la résistance à la flexion de ce corps.

Les déformations en flexion du corps du turboréacteur provoquent elles-mêmes des déformations du carter autour du rotor, et le carter s'ovalise, ce qui réduit les jeux carter-rotor à certains endroits et les augmente à d'autres endroits (effet de « distorsion de carcasse »).

La présente invention a notamment pour but d'apporter une solution simple, efficace et peu coûteuse à ces problèmes d'effets de taille de guêpe et de distorsion de carcasse dans les turboréacteurs, en particulier dans les turboréacteurs à fort taux de dilution.

Elle propose à cet effet un turboréacteur, comprenant au moins un compresseur, une chambre de combustion, une turbine, une soufflante montée en amont du compresseur et entraînée en rotation par la turbine, et des moyens définissant, en aval de la soufflante, un espace annulaire d'écoulement d'air pour créer un flux secondaire autour des carters du compresseur, de la chambre de combustion et de la turbine, caractérisé en ce que lesdits moyens comprennent une enveloppe sensiblement cylindrique fixe entourant les carters du compresseur, de la chambre de combustion et de la turbine et définissant une surface sensiblement cylindrique interne de guidage du flux secondaire, cette enveloppe étant formée d'une seule pièce rigide et fixée à son extrémité amont sur un carter intermédiaire qui est relié rigidement par des bras radiaux à une nacelle de la soufflante, et à son extrémité aval sur un carter d'échappement et assurant une transmission d'efforts entre le carter structural et le carter d'échappement, et en ce que l'enveloppe comprend des portes d'accès à des équipements se trouvant à l'intérieur de cette enveloppe, tels que des injecteurs de carburants, des anneaux de commande d'aubes à calage variable, et une boîte d'engrenages d'entraînement d'accessoires.

Cette enveloppe, qui entoure à distance le corps du turboréacteur et qui le rigidifie, s'oppose aux déformations en flexion du corps du turboréacteur et forme une structure de transmission d'efforts entre les parties avant et arrière du corps du turboréacteur.

Sa réalisation d'une seule pièce permet d'augmenter sa rigidité et donc de diminuer les déformations en flexion du corps du turboréacteur.

Avantageusement, l'extrémité aval de ladite enveloppe est fixée au carter d'échappement par des moyens lui laissant au moins un degré de liberté correspondant à la dilatation thermique du corps du turboréacteur en fonctionnement.

Dans un mode de réalisation particulièrement simple, les extrémités de ladite enveloppe sont fixées par boulonnage au carter intermédiaire et au carter d'échappement.

Ce mode de fixation est simple et peu coûteux et permet le démontage de l'enveloppe si nécessaire.

Grâce à la rigidité de cette enveloppe et à sa fixation sur les carters intermédiaire et d'échappement, il devient possible de supprimer les barres de reprise de poussée qui équipent en général les turboréacteurs.

Selon une autre caractéristique de l'invention, ladite enveloppe comporte dans sa partie aval, des volets articulés et des moyens de déplacement de ces volets entre une position de repos où ils se trouvent dans le prolongement de l'enveloppe et une position de service où ils sont en saillie sur ladite enveloppe et forment des obstacles à l'écoulement du flux secondaire, les moyens de déplacement des volets comprenant des vérins montés sur ladite enveloppe et agissant sur les volets ou sur un anneau de commande des volets.

Cette caractéristique de l'invention présente un avantage notable lorsque l'opérabilité du turboréacteur oblige à augmenter le régime de ralenti vol pendant les phases de descente et d'approche de l'avion. Cette augmentation de régime accroît la poussée du turboréacteur qui devient trop élevée. Les volets prévus sur l'enveloppe permettent de casser la poussée fournie par le flux secondaire lors des phases de descente et d'approche et donc de ramener la poussée totale à un niveau approprié.

Il devient dès lors envisageable de supprimer, sur un turboréacteur à fort taux de dilution, le système classique de « reverse » ou contre-poussée.

D'autres avantages et caractéristiques de l'invention apparaîtront à la lecture de la description suivante faite à titre d'exemple non limitatif et en référence aux dessins annexés dans lesquels :

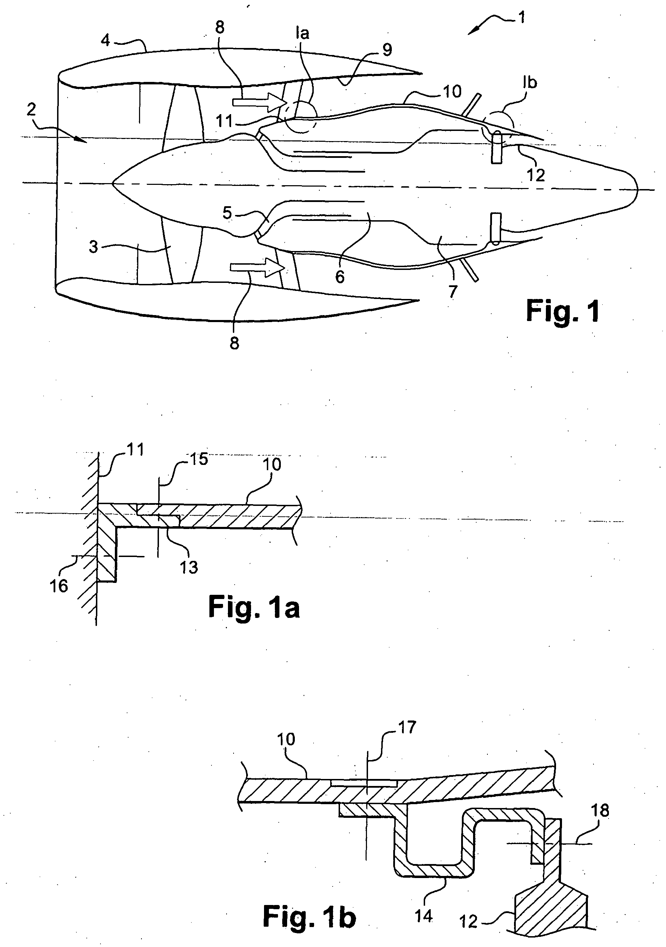

- la figure 1 est une vue très schématique en coupe axiale d'un turboréacteur à fort taux de dilution, selon l'invention ;
- les figures 1 a et 1 b sont des vues agrandies des détails la et Ib de la figure 1 ;
- le figure 2 est une vue schématique en perspective de l'enveloppe de ce turboréacteur ;
- la figure 3 est une vue schématique en perspective de la partie aval de l'enveloppe de la figure 2, illustrant les moyens de déplacement des volets articulés ;
- la figure 4 est une vue schématique agrandie des moyens de déplacement de volets de la figure 3.

La figure 1 représente très schématiquement un turboréacteur 1 à double flux, comportant à l'avant une soufflante 2 comprenant une roue 3 qui tourne à l'intérieur d'une nacelle 4. Le flux d'air aspiré par la soufflante 2 est partagé en aval de la soufflante en un flux primaire qui passe dans un moteur comprenant un compresseur 5, une chambre annulaire de combustion 6 et une turbine 7, et en un flux secondaire qui s'écoule autour du moteur comme indiqué par les flèches 8 et qui fournit une poussée supplémentaire s'ajoutant à celle fournie par les gaz de combustion éjectés de la turbine 7.

La veine du flux secondaire 8 est délimitée extérieurement par la paroi interne 9 de la nacelle et intérieurement par une enveloppe 10 de forme sensiblement cylindrique qui entoure le moteur et qui s'étend d'un carter structural tel qu'un carter intermédiaire 11 jusqu'à un carter d'échappement 12 en sortie de turbine. Le carter intermédiaire 11 est relié rigidement par des bras radiaux à la nacelle de la soufflante.

Selon l'invention, cette enveloppe 10 est rigide et fixée à ses extrémités amont et aval au corps du moteur pour le rigidifier et éviter ses déformations en flexion et l'effet de distorsion de carcasse.

L'augmentation du taux de dilution d'un turboréacteur, c'est-à-dire l'augmentation du rapport débit du flux secondaire / débit du flux primaire, se traduit par une réduction de la section transversale du moteur entre le compresseur et la turbine (effet « taille de guêpe »), cette réduction de section favorisant les distorsions de carcasse comme indiqué plus haut. La fixation de l'enveloppe rigide 10 à ses extrémités sur le corps du moteur évite les déformations en flexion de ce corps, même lorsque le taux de dilution est important, par exemple lorsqu'il est compris entre 5 et 10.

L'enveloppe 10 est d'une seule pièce. Comme on le voit mieux aux figures 1a et 1 b, l'enveloppe 10 est fixée à son extrémité amont au moyen d'une bride annulaire 13 sur le carter intermédiaire 11, et à son extrémité aval par une pièce support 14 sur le carter d'échappement 12, au niveau des moyens de fixation du moteur sur le pylône d'accrochage à l'aile de l'avion. Les fixations sont réalisées de préférence au moyen de boulons 15, 16, 17, 18. La fixation de l'extrémité aval de l'enveloppe 10 sur le carter d'échappement 12 est conçue pour conserver au moins un degré de liberté correspondant aux dilatations thermiques du moteur en fonctionnement. Pour conférer un degré de liberté axial à l'enveloppe 10, la pièce support 14 a une configuration lui conférant une capacité de déformation axiale élastique.

La section de l'enveloppe 10 augmente de son extrémité amont à sa partie médiane située au niveau de l'extrémité arrière de la nacelle 4, puis diminue jusqu'à son extrémité aval, la forme générale de l'enveloppe étant bi-conique.

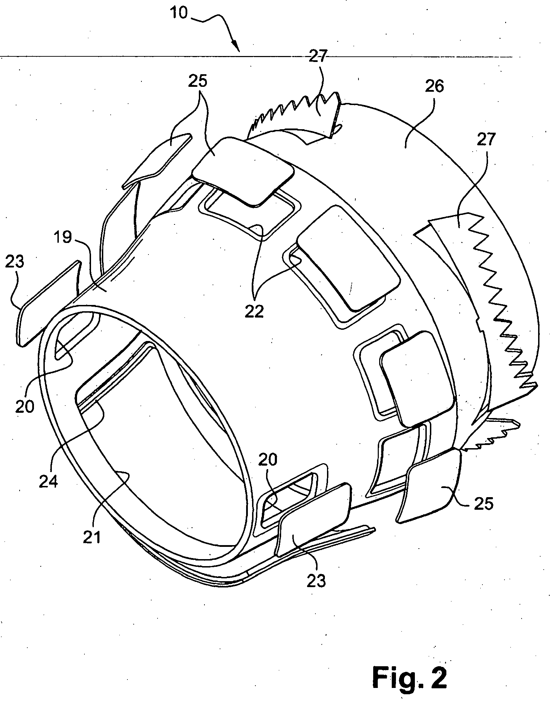

Comme représenté en figure 2, la partie amont 19 de l'enveloppe 10 comporte des orifices d'accès à des équipements qui se trouvent à l'intérieur de cette enveloppe, et notamment des orifices 20 d'accès à des anneaux de commande d'aubes à calage variable qui se trouvent sur un carter du compresseur 5, un orifice 21 d'accès à une boite d'engrenages de commande d'accessoires et des orifices 22 d'accès à des injecteurs de carburant de la chambre de combustion.

Ces orifices d'accès 20, 21, 22 sont obturables par des portes ou des panneaux amovibles 23, 24, 25 respectivement que l'on fixe sur l'enveloppe 10 par tout moyen approprié, par exemple par vissage.

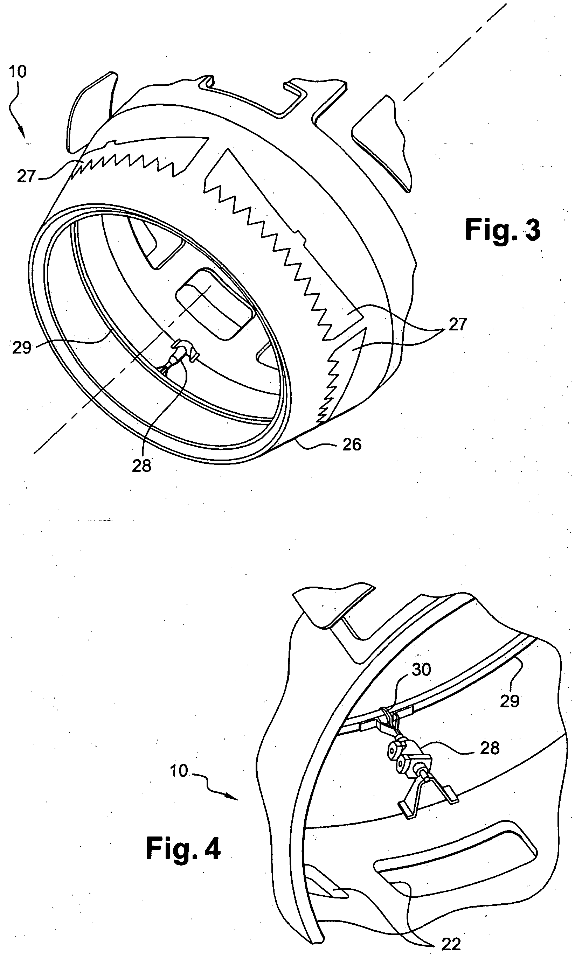

La partie aval 26 de l'enveloppe 10, qui se situe en aval du col de la tuyère du flux secondaire 8, comporte des volets ou panneaux articulés 27 qui sont à disposition circonférentielle et qui peuvent pivoter autour d'axes transversaux tangents à une circonférence de l'enveloppe 10 entre une position représentée en figure 2 où ils sont en saillie vers l'extérieur sur l'enveloppe 10 et une position escamotée ou position de repos où ils s'étendent dans la surface de l'enveloppe 10, comme représenté en figure 3.

En position sortie, les volets ou panneaux 27 font obstacle à l'écoulement vers l'aval du flux secondaire 8 et cassent la poussée fournie par la soufflante 2. Cela se révèle intéressant lorsque l'opérabilité du turboréacteur ne permet pas de diminuer suffisamment le régime moteur pendant les phases de descente et d'approche. On peut ainsi conserver un régime moteur suffisant tout en réduisant la poussée.

Les volets ou panneaux 27 peuvent comporter des chevrons pour réduire le bruit.

Ils sont actionnés par de petits vérins 28, directement ou par l'intermédiaire d'un anneau 29 de commande, comme représenté aux figures 3 et 4.

Dans ces figures, un anneau 29 de commande des volets ou panneaux 27 est monté à l'intérieur de la partie aval 26 de l'enveloppe 10 et est déplacé au moyen d'au moins un vérin 28 dont le cylindre est porté par l'enveloppe 10 et dont la tige de piston agit sur l'anneau 29 relié par des biellettes 30 aux volets ou panneaux 27.

Ce système de volets ou panneaux 27 permet de supprimer sur un moteur à grand taux de dilution les moyens de « reverse » ou contre-poussée qui sont habituellement prévus sur ce type de moteurs. Il en résulte une réduction du nombre de pièces et du coût.

## Revendications

1. Turboréacteur, comprenant au moins un compresseur (5), une chambre de combustion (6), une turbine (7), une soufflante (2) montée en amont du compresseur (5) et entraînée en rotation par la turbine (7), et des moyens définissant, en aval de la soufflante (2), un espace annulaire d'écoulement d'un flux secondaire (8) autour des carters du compresseur, de la chambre de combustion et de la turbine, **caractérisé en ce que** lesdits moyens comprennent une enveloppe sensiblement cylindrique fixe (10) entourant les carters du compresseur, de la chambre de combustion et de la turbine et définissant une surface sensiblement cylindrique interne de guidage du flux secondaire (8), cette enveloppe (10) étant formée d'une seule pièce rigide et fixée à son extrémité amont (19) sur un carter intermédiaire (11) qui est relié rigidement par des bras radiaux à une nacelle de la soufflante, et à son extrémité aval (26) sur un carter d'échappement (12) et assurant une transmission d'efforts entre le carter intermédiaire (11) et le carter d'échappement (12), et **en ce que** l'enveloppe (10) comprend des portes d'accès (23, 24, 25) à des équipements se trouvant à l'intérieur de cette enveloppe (10), tels que des injecteurs de carburants, des anneaux de commande d'aubes à calage variable, et une boîte d'engrenages d'entraînement d'accessoires.

2. Turboréacteur selon la revendication 1, **caractérisé en ce que** l'extrémité aval (26) de ladite enveloppe (10) est fixée au carter d'échappement (12) par des moyens laissant un degré de liberté correspondant à la dilatation thermique du turboréacteur en fonctionnement.

3. Turboréacteur selon la revendication 1 ou 2, **caractérisé en ce que** les extrémités (19, 26) de ladite enveloppe (10) sont fixées par boulonnage au carter intermédiaire (11) et au carter d'échappement (12).

4. Turboréacteur selon l'une des revendications précédentes, **caractérisé en ce que** ladite enveloppe (10) comporte dans sa partie aval (26), des volets articulés (27) et des moyens de déplacement de ces volets (27) entre une position de repos où ils se trouvent dans le prolongement de l'enveloppe (10) et une position de service où ils sont en saillie sur ladite enveloppe (10) et forment des obstacles à l'écoulement du flux secondaire (8).

5. Turboréacteur selon la revendication 4, **caractérisé en ce que** les moyens de déplacement des volets (27) comprennent des vérins (28) montés sur ladite enveloppe (10) et agissant sur les volets (27) ou sur un anneau (29) de commande des volets (27).

## Patentansprüche

1. Turbostrahltriebwerk, dass mindestens einen Kompressor (5), eine Brennkammer(6), eine Turbine (7) und ein vor den Kompressor montiertes und von der Turbine (7) rotierend angetriebenes Gebläse (5) umfasst, und Vorrichtungen, die hinter dem Gebläse (2) einen ringförmigen Strömungsbereich für einen Sekundärstrom (8) um die Gehäuse von Kompressor, Brennkammer und Turbine herum bilden, **dadurch gekennzeichnet, dass** besagte Vorrichtungen eine im wesentlichen zylindrische, feststehende Hülle (10) umfassen, welche die Gehäuse von Kompressor, Brennkammer und Turbine umschließt, und eine im wesentlichen zylindrische interne Führungsfläche für den Sekundärstrom (8) beschreiben, wobei diese Hülle (10) aus einem einzigen steifen Stück geformt ist, das am vorderen Ende (19) an einem Zwischengehäuse (11), welches über radiale Achsen steif mit einer Gondel des Gebläses verbunden ist, und am hinteren Ende (26) an einem Auspuffgehäuse (12), das Kräfte zwischen dem Zwischengehäuse (11) und dem Auspuffgehäuse (12) überträgt, befestigt ist, und dadurch, dass die Hülle (10) Zugangstüren (23, 24, 25) zu Vorrichtungen im Innern der Hülle (10) aufweist, wie z.B. Kraftstoffeinspritzungen oder Steuerungsringe für Schaufeln mit veränderlicher Anstellung, und ein Getriebe für den Antrieb von Zubehörteilen.

2. Turbostrahltriebwerk nach Patentanspruch 1, **dadurch gekennzeichnet, dass** das hintere Ende (26) besagter Hülle (10) mittels Vorrichtungen, die einen Freiheitsgrad für die thermische Ausdehnung des in Betrieb befindlichen Turbostrahltriebwerks lassen, am Abgasgehäuse (12) befestigt ist.

3. Turbostrahltriebwerk nach Patentanspruch 1 oder 2, **dadurch gekennzeichnet, dass** die Enden (19, 26) besagter Hülle (10) an Zwischengehäuse (11) und Abgasgehäuse (12) versplintet sind.

4. Turbostrahltriebwerk nach einem der vorhergehenden Ansprüche, **dadurch gekennzeichnet, dass** besagte Hülle (10) im hinteren Teil (26) gelenkig montierte Klappen (27) und Elemente zum Verschieben dieser Klappen (27) zwischen einer Ruhestellung, in der sie sich in der Verlängerung der Hülle (10) befinden, und einer Betriebsstellung, in der sie über die Hülle (10) hinausragen, aufweist, und diese für den Sekundärstrom (8) ein Hindernis bilden.

5. Turbostrahltriebwerk nach Anspruch 4, **dadurch gekennzeichnet, dass** die Vorrichtungen zum Verschieben der Klappen (27) Zylinder (28) umfassen, die auf besagte Hülle (10) montiert sind und auf die Klappen (27) oder auf einen Steuerungsring (29) der Klappen (27) einwirken.

## Claims

1. A turbojet comprising at least one compressor (5), a combustion chamber (6), a turbine (7), and a fan (2) mounted upstream from the compressor (5) and rotated by the turbine (7), and means downstream from the fan (2) defining an annular space for a bypass flow (8) to flow around the casings of the compressor, the combustion chamber, and the turbine, the turbojet being **characterized in that** said means comprise a stationary substantially-cylindrical jacket (10) surrounding the casings of the compressor, the combustion chamber, and the turbine, and defining a substantially-cylindrical inner surface for guiding the bypass flow (8), the jacket (10) being made as a single rigid piece and being fastened at its upstream end (19) to an intermediate casing (11) which is rigidly fixed by radial arms to a nacelle of the fan (2), and at its downstream end (26) to an exhaust casing (12), and serving to transmit forces between the intermediate casing (11) and the exhaust casing (12), and **in that** the jacket (10) comprises access doors (23, 24, 25) to equipment located inside the jacket (10), such fuel injectors, variable-pitch vane control rings, and an accessory driving gearbox.

2. A turbojet according to claim 1, **characterized in that** the downstream end (26) of said jacket (10) is fastened to the exhaust casing (12) by means that leave a degree of freedom corresponding to thermal expansion of the turbojet in operation.

3. A turbojet according to claim 1 or claim 2, **characterized in that** the ends (19, 26) of said jacket (10) are fastened to the intermediate casing (11) and to the exhaust casing (12) by bolts.

4. A turbojet according to any preceding claim, **characterized in that** said jacket (10) includes, in its downstream portion (26), hinged flaps (27) and means for moving the flaps (27) between a rest position in which they lie in line with the jacket (10), and an in-service position in which they project from said jacket (10) and form obstacles to the bypass flow (8).

5. A turbojet according to claim 4, **characterized in that** the means for moving the flaps (27) comprises actuators (28) mounted on said jacket (10) and acting on the flaps (27) or on a control ring (29) for the flaps (27).
